# EUROPÄISCHE PATENTSCHRIFT

(11) **EP 1 327 828 B1**
(45) Veröffentlichungstag und Bekanntmachung des Hinweises auf die Patenterteilung: **03.05.2006**
(21) Anmeldenummer: 02027396.7
(22) Anmeldetag: 09.12.2002
(51) Int. Cl.: F24D 3/16, F24D 3/14

(54) **Wandheizung oder Fussbodenheizung mit Heizleitungen zwischen Schamottesteinen**
Wall heating or underfloor heating with heating pipes or heating cables between chamotte bricks
Chauffage par le mur ou par le sol avec un conduit de chauffage entre briques de chamotte

(30) Priorität: 11.01.2002 DE 20200464 U; 11.04.2002 DE 10216065
(43) Veröffentlichungstag der Anmeldung: 16.07.2003
(73) Patentinhaber: Baustoffe Guth GmbH & Co.KG, 42549 Velbert (DE)
(72) Erfinder: Wasner Till, 42555 Velbert (DE); Terhorst Heinrich, 42555 Velbert (DE)
(74) Vertreter: Gesthuysen, von Rohr & Eggert

(56) Entgegenhaltungen:
- EP-A- 0 514 684
- EP-A- 1 063 478
- EP-A- 1 167 888
- DE-A- 3 213 647
- DE-A- 19 936 658

## Beschreibung

Die Erfindung betrifft eine Heizung, insbesondere eine Wand- oder Fußbodenheizung.

Fußbodenheizungen, insbesondere jedoch auch Wandheizungen sind in letzter Zeit immer beliebter geworden, da sie eine vom Menschen als besonders angenehm empfundene Art der Heizung darstellen. Ähnlich der Funktion eines Kachelofens beruht die Funktion einer Wandheizung nämlich auf der von ihr abgegebenen Strahlungswärme. Obwohl die Umgebungstemperatur der Luft relativ gering sein kann, fühlt man sich in der Nähe einer Wandheizung behaglich warm, da man von ihr "warm angestrahlt" wird. Diese als angenehm empfundene Heizung durch Strahlungswärme entspricht im übrigen auch dem Effekt, der dadurch erzielt wird, daß man sich z. B. im Winter im Freien der Sonne aussetzt. Trotz kühler Umgebungstemperatur, die gegebenenfalls unter 0 °C liegt, wird eine angenehme Erwärmung empfunden, die von der von der Sonne empfangenen Strahlungswärme herrührt.

Wand- und Fußbodenheizungen sind aus dem Stand der Technik grundsätzlich gut bekannt. Bei bekannten Wand- oder Fußbodenheizungen wird typischerweise derart vorgegangen, daß eine Heizleitung, im allgemeinen ein Heizwasserrohr oder ein Heizdraht, z. B. mäanderförmig an einer Gebäudewand bzw. auf einem Gebäudeboden angebracht und danach mit einem Baustoff, wie Mörtel, Putz oder Estrich bedeckt wird Siehe beispielsweise DE 199 36 658 A. Außerdem ist aus dem Stand der Technik eine Wandheizung bekannt, bei der spezielle Heizungswandsteine aus gebranntem Ton mit einer Nut für die Heizleitung verwendet werden, um damit separate Heizwände zu mauern. Siehe beispielsweise EP 1063 478 A.

Bei den aus dem Stand der Technik bekannten Lösungen ist jedoch nachteilig, daß entweder eine homogene Erwärmung der Wand- bzw. Fußbodenheizung nur schwer erzielbar ist oder, nämlich insbesondere bei der Verwendung der zuvor angesprochenen Heizungswandsteine, der Aufbau der Wandheizung und deren Herstellung sehr aufwendig und teuer ist.

Dementsprechend ist es die Aufgabe der Erfindung, eine solche, insbesondere als Wand- oder Fußbodenheizung ausgebildete Heizung anzugeben, die auf einfache Weise preiswert herstellbar ist und eine homogene Erwärmung gewährleistet.

Die erfindungsgemäße Heizung, mit der die zuvor hergeleitete und aufgezeigte Aufgabe gelöst ist, weist eine Mehrzahl von Heizsteinen und wenigstens eine Heizleitung auf, wobei die Heizsteine und die Heizleitung auf einer Gebäudewand bzw. auf einem Gebäudeboden anbringbar sind, die Heizsteine zumindest teilweise im Abstand voneinander angeordnet sind, die Heizleitung zwischen den im Abstand voneinander angeordneten Heizsteinen verläuft und die Heizsteine aus Schamotte bestehen.

Erfindungsgemäß wird die Heizleitung also nicht in einen Baustoff, wie Mörtel, Putz oder Estrich, oder in das Innere der Heizsteine eingebettet, sondern verläuft zwischen den im Abstand voneinander angeordneten Heizsteinen. Dadurch, daß die Heizleitung zwischen im Abstand voneinander angeordneten Heizsteinen verläuft, ist auch keine spezielle Ausbildung der Heizsteine bezüglich ihrer Form erforderlich, es müssen also z. B. keine Nuten, Rillen oder Bohrungen in den Heizsteinen für die Aufnahme der Heizleitung vorgesehen sein. Ferner ist für die Erfindung wesentlich, daß Heizsteine aus Schamotte verwendet werden, insbesondere nämlich aus einer solchen Schamotte, wie sie auch für den Ofen- und Kaminbau Verwendung findet.

Erfindungsgemäß ist es lediglich erforderlich, daß diejenigen Heizsteine, zwischen denen die Heizleitung verläuft, im Abstand voneinander angeordnet sind. Jedoch können auch die anderen Heizsteine im Abstand voneinander angeordnet sein. Gemäß einer bevorzugten Weiterbildung der Erfindung ist allerdings vorgesehen, daß einander benachbarte Heizsteine, zwischen denen keine Heizleitung verläuft, in direktem wärmeleitenden Kontakt miteinander stehen. Damit wird die Homogenität der Erwärmung der Heizung insgesamt verbessert. Die Homogenität der Erwärmung der Heizung wird gemäß einer bevorzugten Weiterbildung der Erfindung ferner auch dadurch verbessert, daß die Heizleitung zwischen den Heizsteinen zumindest teilweise mäanderförmig verlegt ist. Dadurch wird nämlich eine annähernd optimale Flächenabdeckung bei verhältnismäßig kurzer Länge der Heizleitung erzielt.

Grundsätzlich sind als Heizsteine für die erfindungsgemäße Heizung Heizsteine mit ganz unterschiedlichen Formen verwendbar. Gemäß einer bevorzugten Weiterbildung der Erfindung ist jedoch vorgesehen, daß die Heizsteine, zwischen denen die Heizleitung verlegt ist, quaderförmig und insbesondere plattenförmig sind. Dabei ist ganz besonders bevorzugt, daß die Heizsteine, zwischen denen die Heizleitung verlegt ist, eine Dicke von maximal 4 cm, vorzugsweise eine Dicke von 3 cm, aufweisen. Es wird nämlich angestrebt, eine solche Wand- oder Fußbodenheizung zu erhalten, die möglichst wenig auf der Gebäudewand bzw. dem Gebäudeboden aufträgt. Versuche haben gezeigt, daß schon bei einer Dicke von 3 cm der Heizsteine eine gute Erwärmungs- und Abstrahlcharakteristik der Heizung erzielt wird.

Grundsätzlich können die Heizsteine, zwischen denen die Heizleitung verlegt ist, direkt auf der Gebäudewand bzw. dem Gebäudeboden verlegt sein. Gemäß einer bevorzugten Weiterbildung der Erfindung ist jedoch vorgesehen, daß zwischen der Gebäudewand bzw. dem Gebäudeboden einerseits und den Heizsteinen sowie der dazwischen verlegten Heizleitung andererseits eine zusätzliche Schicht von Heizsteinen vorgesehen ist, die in direktem Kontakt miteinander stehen. Auf diese Weise wird das Volumen der insgesamt verwendeten Heizsteine vergrößert, was der Wärmespeicherung und der Homogenität der Erwärmung der Heizung zuträglich ist.

Die Heizsteine der zusätzlichen Schicht können auf unterschiedliche Weise auf der Gebäudewand bzw. dem Gebäudeboden befestigt sein. Gemäß einer bevorzugten Weiterbildung der Erfindung ist jedoch vorgesehen, daß die Heizsteine der zusätzlichen Schicht auf der Gebäudewand bzw. dem Gebäudeboden mittels eines Mörtels, vorzugsweise mittels eines Schamotte-Mörtels oder mittels eines feuchtigkeitsdurchlässigen Fliesenklebers befestigt sind. Außerdem ist gemäß einer bevorzugten Weiterbildung der Erfindung vorgesehen, daß die Heizsteine der zusätzlichen Schicht auch mit den daraufliegenden Heizsteinen verklebt sind, nämlich vorzugsweise ebenfalls mittels eines feuchtigkeitsdurchlässigen Fliesenklebers. Die Feuchtigkeitsdurchlässigkeit des Fliesenklebers bzw. die naturgemäß gegebene Feuchtigkeitsdurchlässigkeit des Schamotte-Mörtels sind insofern vorteilhaft, als daß die Heizsteine auf diese Weise Feuchtigkeit aufnehmen bzw. abgeben können, was insgesamt einem natürlichen und angenehmen Raumklima des beheizten Raumes entgegenkommt. Bezüglich der Heizsteine der zusätzlichen Schicht gilt im übrigen auch, daß diese vorzugsweise quaderförmig, ganz besonders bevorzugt plattenförmig sind. Außerdem gilt für deren Dicke ebenfalls, daß diese vorzugsweise maximal 4 cm, besonders bevorzugt 3 cm beträgt.

Grundsätzlich gilt, daß der Abstand der Heizsteine, zwischen denen die Heizleitung verläuft, voneinander geringfügig größer, vorzugsweise nämlich 0,5 bis 1 cm größer ist als der Außendurchmesser der Heizleitung und die zwischen den Heizsteinen und der Heizleitung gebildeten Hohlräume vollständig mit Mörtel, vorzugsweise mit Schamotte-Mörtel, gefüllt sind. Damit wird nämlich eine annähernd optimale Wärmeübertragung von der Heizleitung auf die Heizsteine erzielt. Im übrigen gilt ferner, daß vorzugsweise auch alle anderen ansonsten gebildeten Hohlräume in der Wandheizung bzw. der Fußbodenheizung ausgefüllt sind, nämlich mit Mörtel, vorzugsweise mit Schamotte-Mörtel.

Ein besonderer Vorteil der erfindungsgemäßen Heizung liegt darin, daß diese quasi "unsichtbar" erstellt werden kann. Eine entsprechende "unsichtbare" Integration der Heizung in eine Gebäudewand oder in einen Gebäudeboden ist gemäß einer bevorzugten Weiterbildung der Erfindung insbesondere dadurch möglich, daß die Heizsteine und die dazwischen verlaufende Heizleitung mit Putz, vorzugsweise mit Schamotte-Putz, verputzt sind. Neben dem ästhetischen Aspekt wird insbesondere bei der Verwendung von Schamotte-Putz auf diese Weise eine weitere Verbesserung der Erwärmungshomogenität, der Abstrahlcharakteristik sowie der Feuchtigkeitsdurchlässigkeit erzielt. Im übrigen ist es besonders bevorzugt, daß der Putz eine Dicke zwischen 0,5 und 1,5 cm, ganz besonders bevorzugt eine Dicke von 1 cm aufweist.

Alternativ zu einem Verputzen der Heizsteine und der dazwischen verlaufenden Heizleitung ist gemäß einer bevorzugten Weiterbildung der Erfindung vorgesehen, daß die Heizsteine und die dazwischen verlaufende Heizleitung mit Kacheln, ganz besonders bevorzugt mit Keramikkacheln, verkachelt sind. Auf diese Weise läßt sich von der Funktion und Optik her ein ähnlicher Effekt erzielen, wie bei einem echten Kachelofen. Dabei ist es besonders bevorzugt, daß die Kacheln eine Dicke zwischen 0,5 und 1,5 cm, ganz besonders bevorzugt von 1 cm, aufweisen.

Schließlich sei noch darauf hingewiesen, daß als Heizleitung für die erfindungsgemäße Heizung grundsätzlich alle solche Arten von Heizleitungen in Frage kommen, die in hinreichend langer und biegsamer Form bereitgestellt werden können. Gemäß einer bevorzugten Weiterbildung der Erfindung ist jedoch vorgesehen, daß als Heizleitung ein Heizwasser führendes Heizrohr, vorzugsweise mit einem Durchmesser zwischen 1,5 und 2 cm, oder ein Heizdraht verwendet wird.

Eine besonders bedeutende Weiterbildung erfährt die Erfindung dadurch, daß die Heizung als aus Modulen aufgebaute Wandheizung konzipiert ist. Vorzugsweise bestehen dabei die einzelnen Module, aus denen sich die Wandheizung zusammensetzen läßt, aus jeweils einer Grundplatte, auf der die Heizsteine im Abstand voneinander angeordnet sind. Diese mit Heizsteinen versehenen Grundplatten lassen sich nun benachbart auf einer Gebäudeinnenwand installieren, wobei vorzugsweise zwischen der Gebäudeinnenwand einerseits und der Grundplatte andererseits ein Abstand von vorzugsweise 1 cm bleibt. Die Heizleitung ist im allgemeinen nicht Bestandteil der Module, sondern wird nach Installation der Module an der Gebäudewand zwischen den im Abstand voneinander vorgesehenen Heizsteinen verlegt. Insgesamt gilt bei der vorliegend beschriebenen Modulbauweise, daß die Heizsteine und die Heizleitung mittelbar, nämlich mittels der Grundplatte auf der Gebäudewand angebracht sind.

Grundsätzlich können auch bei den in Rede stehenden Wandheizungsmodulen mehrschalige Aufbauten, also mehrere Schichten von Heizsteinen übereinander vorgesehen sein, wobei eine zusätzlich Schicht von Heizsteinen aufgebracht wird, wenn das Modul an einer Wand installiert ist. Gemäß einer bevorzugten Weiterbildung der Erfindung ist bei dem modularen Aufbau der Wandheizung jedoch ein einschaliger Aufbau vorgesehen. Als Grundplatten haben sich im übrigen Gipsfaserplatten als besonders geeignet herausgestellt, wobei sich gute Ergebnisse aber auch mit anderen Arten von Grundplatten erzielen lassen, insbesondere wenn diese diffusionsoffen sind.

Im allgemeinen ist für die Heizung eine Steuerelektronik vorgesehen. Gemäß einer bevorzugten Weiterbildung der Erfindung ist diese bei dem modularen Aufbau der Wandheizung und bei der Verwendung von Warmwasser führenden Heizrohren in einem Kasten vorgesehen, der auf einem der Module angeordnet ist. Im Ergebnis läßt sich damit eine solche Wandheizung erzielen, die sich zu großen Anteilen, nämlich einschließlich Wärmeregelung, vorfertigen läßt und nur noch eine kurze Installationszeit in dem Gebäude bzw. Raum erfordert, in dem sie installiert werden soll. Insbesondere kann durch eine solche Vorfertigung ein gleichbleibender Qualitätsstandard gewährleistet werden, und die Installation vor Ort kann gegebenenfalls alleine durch eine einzige Person durchgeführt werden. Bei Verwendung von Schamotte-Heizsteinen mit einer Dicke von 30 mm und einschaliger Bauweise wiegt ein Modul mit einer Abmessung von 62 cm x 75 cm ca. 22 kg, was im allgemeinen von einer Person alleine noch gehandhabt werden kann.

Was die Anbringung der Wandheizungsmodulen an der Gebäudewand betrifft, sei schließlich angemerkt, daß dafür vorgefertigte Metallhalter vorgesehen werden können, in die die Module eingesetzt werden und bei deren Verwendung automatisch der korrekte Abstand der Grundplatten von der Gebäudewand garantiert wird.

Im einzelnen gibt es nun eine Vielzahl von Möglichkeiten, die erfindungsgemäße Heizung auszugestalten und weiterzubilden. Dazu wird auf die dem Patentanspruch 1 nachgeordneten Patentansprüche sowie auf die folgende Beschreibung bevorzugter Ausführungsbeispiele der Erfindung unter Bezugnahme auf die Zeichnung verwiesen.

In der Zeichnung zeigt
- Fig. 1: schematisch den Aufbau einer Wandheizung gemäß einem ersten bevorzugten Ausführungsbeispiel der Erfindung,
- Fig. 2: eine Wandheizung gemäß einem zweiten bevorzugten Ausführungsbeispiel der Erfindung in unverputztem Zustand in perspektivischer Ansicht,
- Fig. 3: die Wandheizung gemäß dem zweiten bevorzugten Ausführungsbeispiel der Erfindung in unverputztem Zustand Draufsicht,
- Fig. 4: eine Wandheizung gemäß einem dritten bevorzugten Ausführungsbeispiel der Erfindung in unverputztem Zustand in perspektivischer Ansicht und
- Fig. 5: die Wandheizung gemäß dem dritten bevorzugten Ausführungsbeispiel der Erfindung in unverputztem Zustand in Draufsicht.

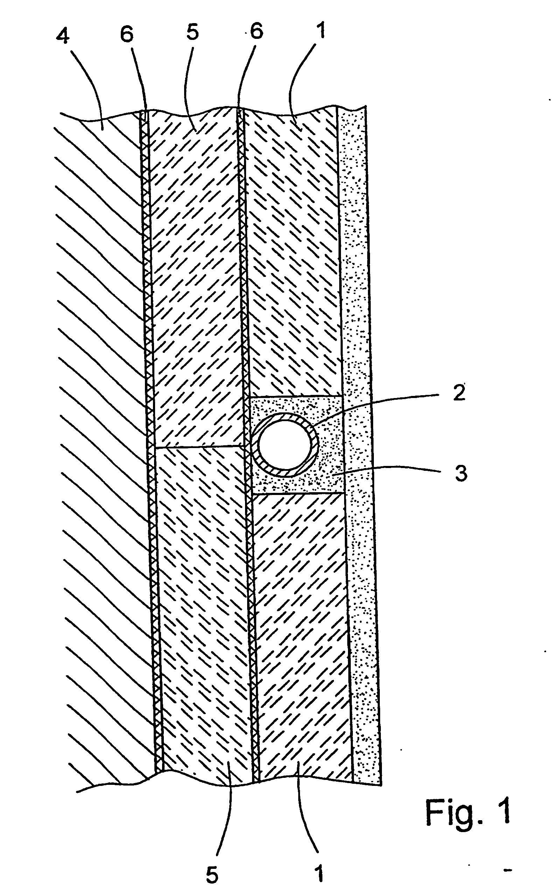

Aus Fig. 1 ist zunächst der Aufbau einer Wandheizung gemäß einem ersten bevorzugten Ausführungsbeispiel der Erfindung ersichtlich. Dieser Aufbau wird im übrigen auch bei den weiter unten beschriebenen Wandheizungen gemäß einem zweiten bzw. gemäß einem dritten bevorzugten Ausführungsbeispiel der Erfindung verwendet. Gemäß diesem Aufbau weist die Wandheizung Heizsteine 1 auf, die im Abstand voneinander angeordnet sind, wobei in dem zwischen den Heizsteinen 1 gebildeten Abstand eine Heizleitung 2 vorgesehen ist, nämlich ein Heizwasser führendes Heizrohr. Bei diesem Heizrohr handelt es sich um ein diffusionsdichtes Rohr mit dreiwandigem Kunststoff-Aluminium-Kunststoff-Aufbau. Solche, aus dem Stand der Technik gut bekannten Heizrohre sind leicht zu formen und zu verlegen. Entsprechende Biegehilfen für den Aufbau der Wandheizung sind verfügbar.

Der Außendurchmesser der Heizleitung 2 ist etwas geringer als der Abstand der beiden Heizsteine 1 voneinander: Während der Durchmesser der Heizleitung 2 vorliegend 1,6 cm beträgt, sind die Heizsteine 1 mit einem Abstand von 2,5 cm voneinander angeordnet. Auf diese Weise wird die Installation der Heizleitung 2, nämlich deren Einpassung zwischen die Heizsteine 1, erleichtert, jedoch sollen in der Wandheizung vorzugsweise keine Lufteinschlüsse entstehen, um eine optimale Wärmeleitung zu gewährleisten, so daß die zwischen der Heizleitung 2 und den Heizsteinen 1 gebildeten Hohlräume praktisch vollständig mit Mörtel 3 gefüllt sind.

Die Heizsteine 1 bestehen bei dem vorliegend beschriebenen ersten bevorzugten Ausführungsbeispiel der Erfindung aus Schamotte. Schamotte stellt eine hochhitzebeständigen Keramik aus typischerweise 42-45 % Al₂O₃ und etwa 50-54 % SiO₂ dar. Damit kann ein Schmelzpunkt der Schamotte von über 1700 °C erzielt werden. Schamotte-Steine sind bisher als feuerfeste Baustoffe z. B. zum Auskleiden von Feuerungen, Hochöfen, Winderhitzern usw. verwendet worden. Bei der nunmehr vorgeschlagenen Verwendung von Schamotte für Wand- bzw. Fußbodenheizungen sind insbesondere deren gute Wärmeleitfähigkeit und Wärmespeicherfähigkeit von Vorteil. Es ist nämlich Schamotte einer Qualität verfügbar, die einen nahezu konstanten Verlauf der Wärmeleitfähigkeit im Temperaturbereich zwischen 20 °C und 1000 °C mit ca. 1,2 W/mK bei einer sehr hohen Dichte von ca. 3 kg/dm³ aufweist. Damit sind wesentliche Vorteile verbunden, wie ein gleichmäßiger Temperaturverlauf im Raum bei Einspeicherung von unterschiedlichen Wärmemengen und einer schnellen Reaktion auf Temperaturveränderungen. Die Wand- bzw. Fußbodenheizung ist also wenig träge. Außerdem kann eine sehr große Wärmemenge eingespeichert werden, was bedeutet, daß die Größe der Wand- bzw. Fußbodenheizung gegenüber herkömmlichen Wand- bzw. Fußbodenheizungen verringert sein kann.

Als besonders geeignet hat sich eine Schamotte herausgestellt, die folgende Eigenschaften aufweist:
- Die Körnung der Schamotte liegt bei einem Wert, der kleiner oder gleich 4 mm ist.
- Der Tonerdegehalt (Al₂O₃) der Schamotte liegt bei ca. 30 %. Der Te₂C₃₋Gehalt, der K₂O-Gehalt und der Na₂O-Gehalt zusammen liegen unter 5%.
- Die Feuerfestigkeit der Schamotte liegt bei 1500 °C, wobei die Dauerbeanspruchungstemperatur 1100 °C beträgt.
- Die Druckfestigkeit der Schamotte soll bei einer Plattendicke von 20 mm im Mittel größer oder gleich 25 N/mm² sein.
- Die Rohdichte der Schamotte beträgt ca. 1,85 kg/dm³.
- Die Porösität der Schamotte beträgt ca. 28 %.
- Die Wasseraufnahme der Schamotte liegt bei ca. 15 %.

Werden für eine Heizwand gemäß einem bevorzugten Ausführungsbeispiel der Erfindung Heizsteine 1 aus einer solchen Schamotte verwendet, so läßt sich innerhalb einer sehr kurzen Anlaufzeit eine sehr gleichmäßige Temperaturverteilung der Heizwand erzielen, bei der die Temperaturunterschiede zwischen den Bereichen, in den die Heizleitung 2 verläuft, und den benachbarten Bereichen unter 1 K liegen. Entsprechend gute Heizcharakteristiken lassen sich mit anderen Heizsteinen aus z. B. Tonziegeln nicht erzielen.

Wegen der Verwendung von Schamotte als Material für die Heizsteine 1 wird als Mörtel 3 für die Hohlräume zwischen der Heizleitung 2 und den Heizsteinen 1 vorliegend ebenfalls Schamotte-Mörtel verwendet. Damit erfolgt hinsichtlich der Wärmeleitfähigkeit eine nahezu ideale Ankopplung der Heizleitung 2 an die Heizsteine 1.

Die Heizsteine 1 mit der dazwischen verlaufenden Heizleitung 2 sind nicht direkt auf die Gebäudewand 4 aufgebracht. Zwischen der Gebäudewand 4 und der Schicht mit der zwischen den Heizsteinen 1 verlaufenden Heizleitung 2 ist nämlich eine zusätzliche Schicht von Heizsteinen 5 vorgesehen. Bei den Heizsteinen 5 handelt es sich ebenfalls um Heizsteine aus Schamotte. Der Aufbau der Heizsteine 5 entspricht grundsätzlich dem Aufbau der Heizsteine 1, jedoch sind die Grundflächen der Heizsteine 5 gemäß dem vorliegend beschriebenen ersten bevorzugten Ausführungsbeispiel der Erfindung größer, da zwischen den Heizsteinen 5 keine Heizleitung verläuft. Die Heizsteine 5 füllen die Fläche unter der Schicht mit den Heizsteinen 1, zwischen denen die Heizleitung 2 verläuft, vollständig aus und sind dabei derart angeordnet, daß einander benachbarte Heizsteine 5 in direktem thermischen Kontakt miteinander stehen, also direkt aneinander angrenzen. Konkret liegen die Abmessungen der Heizsteine 5 vorliegend bei 50 cm x 20 cm x 3 cm, während die darüberliegenden Heizsteine 1 jeweils Abmessungen von 25 cm x 12,5 cm x 3 cm aufweisen.

Die Verbindung der Heizsteine 5 mit der Wand 4 sowie die Verbindung der Heizsteine 1 mit den Heizsteinen 5 erfolgt vorliegend mittels jeweils einer Schicht feuchtigkeitsdurchlässigen Fliesenklebers 6. Was die Verbindung der Heizsteine 5 der zusätzlichen Schicht mit der Gebäudewand 4 angeht, so ist dazu auch eine Schicht aus einem Schamotte-Mörtel verwendbar. Die Schamotte-Mörtel immanente Feuchtigkeitsdurchlässigkeit bzw. die Feuchtigkeitsdurchlässigkeit des verwendeten Fliesenklebers 6 ist insofern von Vorteil, als daß dadurch eine Feuchtigkeitsaufnahme bzw. eine Feuchtigkeitsabgabe der Heizsteine 1, 5 ermöglicht wird, was wesentlich zu einer Verbesserung des erzielten Raumklimas beiträgt. Anstatt einer trockenen "Heizungsluft" wird damit ein Klima mit natürlicher und angenehmer Feuchte erzielt.

Die Wandheizung mit ihrem zweischichtigen Aufbau aus Heizsteinen 1, zwischen denen die Heizleitung 2 verläuft, und den darunterliegenden Heizsteinen 5 ist zum Raum hin mit einer Schicht aus einem Schamotte-Putz 7 versehen. Diese Schicht aus Schamotte-Putz 7 weist vorliegend eine Dicke von etwa 0,5 cm auf und dient neben einem optisch ansprechenden Abschluß, nämlich einer "unsichtbaren Integration" der Wandheizung in die Gebäudewand 4, zusätzlich einer weiteren Homogenisierung der Wärmeverteilung in der Wandheizung.

Bei dem zuvor beschriebenen Aufbau der Wandheizung gemäß dem ersten bevorzugten Ausführungsbeispiel der Erfindung werden, abhängig von der Temperatur des Heizwasservorlaufs, bei Vorlauftemperaturen zwischen 40 °C und 75 °C Oberflächentemperaturen der Wandheizung zwischen 33 °C und 58 °C und einseitige Wärmeabgaben zwischen 140 und 400 W/m³ erzielt. Im allgemeinen gilt, daß etwa 10 - 15 % der Wandfläche eines Raumes mit der zuvor beschriebenen Wandheizung versehen sein müssen, um eine ausreichende Heizung des Raumes zu gewährleisten.

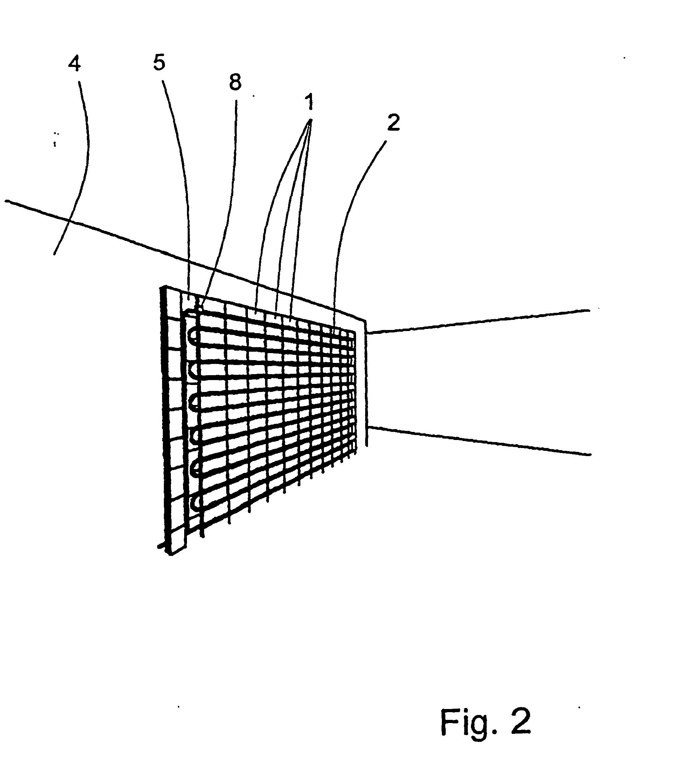

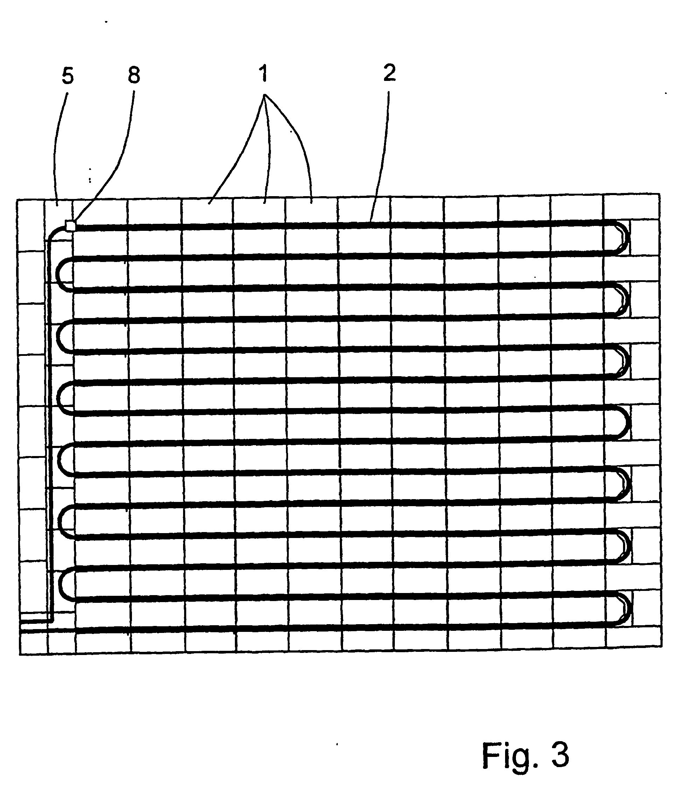

Aus den Fig. 2 und 3 ist eine Wandheizung gemäß einem zweiten bevorzugten Ausführungsbeispiel der Erfindung in unverputztem Zustand ersichtlich, nämlich einmal in perspektivischer Ansicht und einmal in Draufsicht. Wie aus Fig. 2 ersichtlich, ist die Wandheizung gemäß dem zweiten bevorzugten Ausführungsbeispiel der Erfindung, beginnend am Boden bis etwa 40 cm unterhalb der Decke, an einer Gebäudewand angebracht. Versuche haben gezeigt, daß eine vollständige Abdeckung der Gebäudewand bis hoch an die Decke, nicht empfehlenswert ist. Wesentlich bessere Ergebnisse bezüglich der Heizung des Raumes werden erzielt, wenn, wie vorliegend gezeigt, die Wandheizung vom Boden aus gemessen nur etwa 4/5 der Höhe der Gebäudewand bedecken. Wie noch deutlicher aus Fig. 3 ersichtlich, ist vorliegend die Wandheizung in einem solchen Zustand gezeigt, in dem auf eine Schicht Heizsteine 5 die Schicht der Heizsteine 1 aufgebracht ist, zwischen denen die Heizleitung 2 verläuft, wobei die zwischen der Heizleitung 2 und den Heizsteinen 1 gebildeten Hohlräume noch nicht vollständig mit Schamotte-Mörtel 3 ausgefüllt sind. Darüber hinaus ist auch noch keine abschließende Putzschicht aus Schamotte-Putz 7 aufgebracht.

Wie den Fig. 2 und 3 zwar nicht im einzelnen entnehmbar, erfolgt der Anschluß der Heizleitung 2, also des Heizrohres, über Standardbauteile mit einer Warmwasserversorgung, wie sie auch für herkömmlich Warmwasserheizungen Verwendung finden kann. Im übrigen erfolgt die Regelung der Temperatur der Wandheizung gemäß dem zweiten bevorzugten Ausführungsbeispiel der Erfindung, entsprechend sonstigen herkömmlichen Warmwasserheizungen, mittels eines Thermostaten 8.

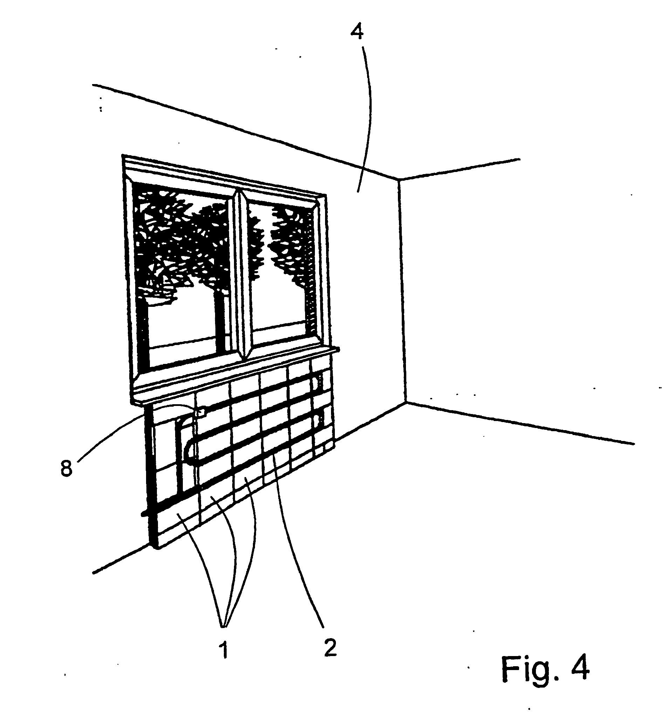

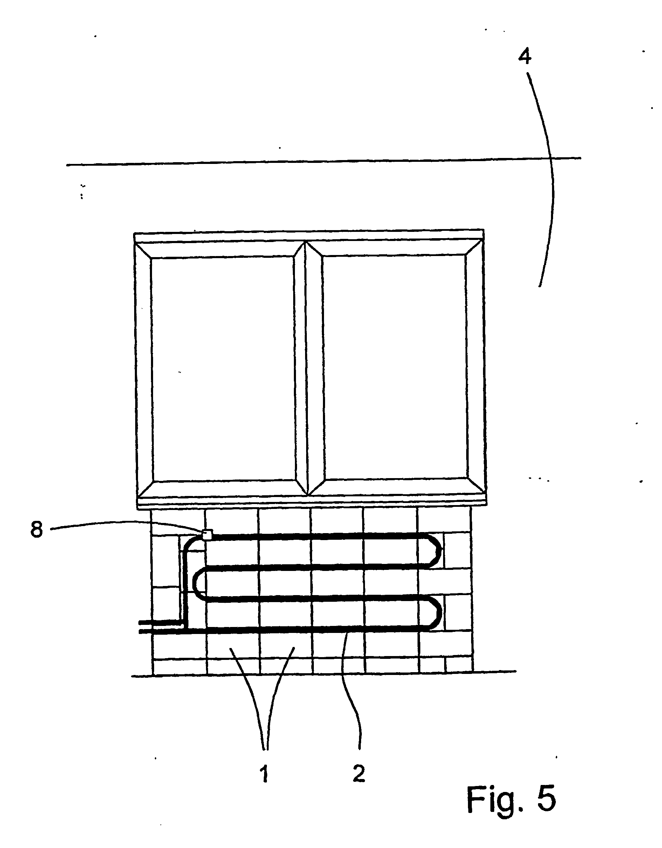

Eine Wandheizung gemäß einem dritten bevorzugten Ausführungsbeispiel der Erfindung, ebenfalls in unverputztem Zustand, ist schließlich aus den Fig. 4 und 5 ersichtlich, einmal wieder in perspektivischer Ansicht und einmal in Draufsicht. Der Aufbau der Wandheizung gemäß dem dritten bevorzugten Ausführungsbeispiel der Erfindung entspricht im wesentlichen dem Aufbau der zuvor unter Bezugnahme auf die in Fig. 2 und 3 erläuterten Wandheizung gemäß dem zweiten bevorzugten Ausführungsbeispiel der Erfindung.

Bei der Wandheizung gemäß dem dritten bevorzugten Ausführungsbeispiel der Erfindung handelt es sich um eine kleinere Ausführung mit einer geringeren Fläche, die, ähnlich zu konventionellen Heizkörpern, unterhalb eines Fensters angeordnet ist. Die Anordnung der Wandheizung unterhalb eines Fensters ist insofern vorteilhaft, als daß einerseits die durch das Fenster hereindringende Kälte effektiv kompensiert werden kann und andererseits ein Auftragen durch die Wandheizung, also eine Verdickung der Gebäudewand durch die Wandheizung, unterhalb des Fenstersimses weniger auffällt und harmonischer in den Raum integriert werden kann.

Grundsätzlich gilt, daß die zuvor beschriebenen Wandheizungen auch, wie weiter oben beschrieben, modular aufgebaut sein können, wobei dabei ein einschaliger Aufbau bevorzugt wird. Die mit einer modular aufgebauten Wandheizung erzielbaren Ergebnisse entsprechen grundsätzlich den zuvor beschriebenen; allerdings ist die Installation einer Wandheizung aus Modulen vereinfacht.

Schließlich sei noch auf eine besonders interessante Anwendungsmöglichkeit der erfindungsgemäßen Heizung hingewiesen: Bei der Verwendung von Wasserrohren als Heizleitungen kann durch diese Rohre bei entsprechendem Bedarf anstatt Warmwasser kühleres Wasser geleitet werden, so daß die Heizung zu einer Kühlung wird. Eine in der kälteren Jahreszeit als Heizung verwendete Wandheizung kann somit in der wärmeren Jahreszeit als Kühlung verwendet werden. Andererseits ist es grundsätzlich auch möglich, die erfindungsgemäße Anordnung von Schamottesteinen und einer Wasserleitung nur zu Kühlzwecken zu installieren. Um eine Kühlwirkung zu erreichen, ist es lediglich erforderlich, Wasser mit einer unter Raumtemperatur liegenden Temperatur durch die Wasserleitung zu führen, wobei ein merklich Kühleffekt schon bei wenigen K Temperaturdifferenz zwischen dem Wasser und der Raumtemperatur auftritt.

## Patentansprüche

1. Heizung, insbesondere Wand- oder Fußbodenheizung, mit einer Mehrzahl von Heizsteinen (1) und wenigstens einer Heizleitung (2), wobei die Heizsteine (1) und die Heizleitung (2) auf einer Gebäudewand (4) bzw. auf einem Gebäudeboden anbringbar sind, die Heizsteine zumindest teilweise im Abstand voneinander angeordnet sind, die Heizleitung (2) zwischen den im Abstand voneinander angeordneten Heizsteinen (1) verläuft und die Heizsteine (1, 5) aus Schamotte bestehen.

2. Heizung nach Anspruch 1, **dadurch gekennzeichnet, daß** benachbarte Heizsteine (1), zwischen denen keine Heizleitung (2) verläuft, in direktem wärmeleitenden Kontakt miteinander stehen.

3. Heizung nach Anspruch 1 oder 2, **dadurch gekennzeichnet, daß** zwischen der Gebäudewand (4) bzw. dem Gebäudeboden einerseits und den Heizsteinen (1) sowie der dazwischen verlegten Heizleitung (2) andererseits eine zusätzliche Schicht von Heizsteinen (5) vorgesehen ist, die in direktem Kontakt miteinander stehen.

4. Heizung nach Anspruch 3, **dadurch gekennzeichnet, daß** die Heizsteine (5) der zusätzlichen Schicht auf der Gebäudewand (4) bzw. dem Gebäudeboden mittels eines Mörtels, vorzugsweise mittels eines Schamotte-Mörtels, oder mittels eines feuchtigkeitsdurchlässigen Fliesenklebers (6), befestigt sind.

5. Heizung nach Anspruch 3 oder 4, **dadurch gekennzeichnet, daß** die Heizsteine (5) der zusätzlichen Schicht mit den daraufliegenden Heizsteinen (1) verklebt sind, vorzugsweise mittels eine feuchtigkeitsdurchlässigen Fliesenklebers (6).

6. Heizung nach einem der Ansprüche 1 bis 5, **dadurch gekennzeichnet, daß** der Abstand der Heizsteine (1), zwischen denen die Heizleitung (2) verläuft, voneinander geringfügig größer; vorzugsweise 0,5 bis 1 cm größer, als der Außendurchmesser der Heizleitung (2) ist und die zwischen den Heizsteinen (1) und der Heizleitung (2) gebildeten Hohlräume vollständig mit Mörtel (3), vorzugsweise mit Schamotte-Mörtel, gefüllt sind.

7. Heizung nach Anspruch 6, **dadurch gekennzeichnet, daß** die Heizsteine (1) und die dazwischen verlaufende Heizleitung (2) mit Schamotte-Putz (7) verputzt sind.

8. Heizung nach einem der Ansprüche 1 bis 7, **dadurch gekennzeichnet, daß** die Heizung modular aufgebaut ist.

9. Heizung nach Anspruch 8, **dadurch gekennzeichnet, daß** die Heizung aus einzelnen Modulen besteht, die jeweils eine Grundplatte mit darauf vorgesehenen Heizsteinen (1) aufweisen.

10. Heizung nach Anspruch 9, **dadurch gekennzeichnet, daß** die Grundplatte im Abstand von der Gebäudewand (4) angeordnet ist.

11. Verwendung einer Heizung mit als Wasserrohr ausgebildeter Heizleitung nach einem der Ansprüche 1 bis 10 als Kühlung für einen Raum, indem durch das Wasserrohr Wasser mit einer unter Raumtemperatur liegenden Temperatur geleitet wird.

## Claims

1. Heating system, especially wall or floor heating, having a plurality of heating bricks (1) and at least one heating pipe (2), wherein the heating bricks (1) and the heating pipe (2) can be fitted on a building wall (4) or on a building floor, the heating bricks are disposed at least partially at a distance apart, the heating pipe (2) runs between the mutually spaced heating bricks (1), and the heating bricks (1, 5) consist of chamotte .

2. Heating system according to Claim 1, **characterized in that** adjacent heating bricks (1) between which no heating pipe (2) is running are in direct heat-conducting contact with one another.

3. Heating system according to Claim 1 or 2, **characterized in that** between the building wall (4) or the building floor, on the one hand, and the heating bricks (1), as well as the heating pipe (2) laid between them, on the other hand, an additional layer of heating bricks (5) is provided, which are in direct contact with one another.

4. Heating system according to Claim 3, **characterized in that** the heating bricks (5) of the additional layer are fastened on the building wall (4) or the building floor by means of a mortar, preferably by means of a chamotte mortar, or by means of a moisture-permeable tile adhesive (6).

5. Heating system according to Claim 3 or 4, **characterized in that** the heating bricks (5) of the additional layer are bonded to the heating bricks (1) lying thereon, preferably by means of a moisture-permeable tile adhesive (6).

6. Heating system according to one of Claims 1 to 5, **characterized in that** the distance apart of the heating bricks (1) between which the heating pipe (2) runs is slightly greater, preferably 0.5 to 1 cm greater, than the external diameter of the heating pipe (2), and the cavities formed between the heating bricks (1) and the heating pipe (2) are completely filled with mortar (3), preferably with chamotte mortar.

7. Heating system according to Claim 6, **characterized in that** the heating bricks (1) and the heating pipe (2) running between them are plastered with chamotte plaster (7).

8. Heating system according to one of Claims 1 to 7 , **characterized in that** the heating system is of modular construction.

9. Heating system according to Claim 8, **characterized in that** the heating system consists of individual modules, which respectively have a base plate with heating bricks (1) provided thereon.

10. Heating system according to Claim 9, **characterized in that** the base plate is disposed at a distance from the building wall (4) .

11. Use of a heating system with heating pipe configured as a water pipe, according to one of Claims 1 to 10, as the cooling system for a room, in that water with a temperature below room temperature is conducted through the water pipe.

## Revendications

1. Chauffage, notamment chauffage par les murs ou par le sol, comprenant une pluralité de briques chauffantes (1) et au moins une conduite de chauffage (2), les briques chauffantes (1) et la conduite de chauffage (2) pouvant être montées sur un mur de bâtiment (4) ou sur un sol de bâtiment, les briques chauffantes étant au moins partiellement espacées les unes des autres, la conduite de chauffage (2) s'étendant entre les briques chauffantes (1) espacées les unes des autres et les briques chauffantes (1, 5) se composant de chamotte.

2. Chauffage selon la revendication 1, **caractérisé en ce que** les briques chauffantes voisines (1) entre lesquelles ne passe aucune conduite de chauffage (2) sont en contact thermoconducteur direct les unes avec les autres.

3. Chauffage selon la revendication 1 ou 2, **caractérisé en ce qu'**entre le mur du bâtiment (4) ou le sol du bâtiment d'une part et les briques chauffantes (1) ainsi que la conduite de chauffage (2) intercalée entre elles d'autre part est prévue une couche supplémentaire de briques chauffantes (5) qui sont en contact mutuel direct.

4. Chauffage selon la revendication 3, **caractérisé en ce que** les briques chauffantes (5) de la couche supplémentaire sont fixées sur le mur du bâtiment (4) ou le sol du bâtiment au moyen d'un mortier, de préférence au moyen d'un mortier de chamotte, ou au moyen d'un adhésif pour dalles perméable à l'humidité (6).

5. Chauffage selon la revendication 3 ou 4, **caractérisé en ce que** les briques chauffantes (5) de la couche supplémentaire sont collées aux briques chauffantes (1) posées dessus, de préférence au moyen d'un adhésif pour dalles perméable à l'humidité (6).

6. Chauffage selon l'une quelconque des revendications 1 à 5, **caractérisé en ce que** la distance entre les briques chauffantes (1), entre lesquelles passe la conduite de chauffage (2), est légèrement supérieure, de préférence de 0,5 à 1 cm supérieure, au diamètre extérieur de la conduite de chauffage (2) et les espaces creux formés entre les briques chauffantes (1) et la conduite de chauffage (2) sont complètement remplis de mortier (3), de préférence de mortier de chamotte.

7. Chauffage selon la revendication 6, **caractérisé en ce que** les briques chauffantes (1) et la conduite de chauffage (2) passant entre elles sont enduites d'un enduit de chamotte (7).

8. Chauffage selon l'une quelconque des revendications 1 à 7, **caractérisé en ce que** le chauffage est modulaire.

9. Chauffage selon la revendication 8, **caractérisé en ce que** le chauffage se compose de modules individuels, qui présentent chacun une plaque de base avec des briques chauffantes (1) prévues dessus.

10. Chauffage selon la revendication 9, **caractérisé en ce que** la plaque de base est disposée à distance du mur du bâtiment (4).

11. Utilisation d'un chauffage avec une conduite de chauffage réalisée sous la forme d'une canalisation d'eau selon l'une quelconque des revendications 1 à 10 en tant que refroidissement pour une pièce, en faisant passer à travers la canalisation d'eau de l'eau à une température inférieure à la température ambiante.
